Europäisches Patentamt

European Patent Office

Office européen des brevets

(19)

(11) Numéro de publication : **0 489 641 A1**

## (12) DEMANDE DE BREVET EUROPEEN

(21) Numéro de dépôt : **91403265.1**

(22) Date de dépôt : **03.12.91**

(51) Int. Cl.$^5$ : **G01B 11/24**

(30) Priorité : **05.12.90 FR 9015207**

(43) Date de publication de la demande :
**10.06.92 Bulletin 92/24**

(84) Etats contractants désignés :
**CH DE GB IT LI**

(71) Demandeur : **COMMISSARIAT A L'ENERGIE
ATOMIQUE
31-33, rue de la Fédération
F-75015 Paris (FR)**

(72) Inventeur : **Bourdarios, Guy
8, rue de L'Erable
F-78720 Dampierre en Yvelines (FR)**
Inventeur : **Rioufreyt, Philippe
24 Passage du Génie
F-75012 Paris (FR)**

(74) Mandataire : **Mongrédien, André et al
c/o BREVATOME 25, rue de Ponthieu
F-75008 Paris (FR)**

(54) **Procédé d'étalonnage d'un système de métrologie tridimensionnelle.**

(57) Dans ce procédé, on utilise un objet étalon (4) constitué d'un ensemble de plans s'interceptant, des moyens d'acquisition de l'image comportant un réseau de franges (2) projeté sur l'objet étalon et une optique de visualisation (8) associée à une caméra de prise de vue (10) fixant l'image obtenue par ladite projection du réseau de franges sur l'objet étalon, et des moyens (12) de traitement automatique permettant la détermination des caractéristiques des moyens d'acquisition et des caractéristiques de la position relative du référentiel lié à l'étalon par rapport au référentiel objet lié à l'optique de visualisation. Ce procédé s'applique à l'établissement de cartographies et au contrôle de pièces mécaniques de formes variées.

FIG. 5

EP 0 489 641 A1

La présente invention concerne un procédé d'étalonnage d'un système de métrologie trimensionnelle permettant, à partir d'un objet étalon choisi, de retrouver tous les paramètres d'éclairement et de détection d'un ensemble de métrologie tridimensionnelle.

Ce procédé de mesure sans contact peut être appliqué pour établir des cartographies précises de surfaces quelconques et, plus particuliérement, il peut être applique au contrôle de pièces mécaniques de formes variées.

La présente invention, comme la plupart des procédés de mesure sans contact, est basée sur le principe de la projection d'un réseau de franges rectilignes sur un objet dont le relief déforme ledit réseau de franges.

En général, les procédés de mesure sans contact connus demandent une mesure du positionnement relatif de chaque élément ainsi que, par exemple, des réglages d'un interféromètre pour déterminer les caractéristiques spatiales du réseau de franges projeté et les caractéristiques de l'optique de visualisation utilisée pour fixer l'image déformée de l'objet.

Un tel procédé est utilisé dans la méthode de profilométrie hétérodyne.

Ces procédés présentent un certain nombre d'inconvénients. En particulier, ils nécessitent un positionnement très rigoureux de l'objet par rapport aux éléments nécessaires à la mise en application desdits procédés.

La présente invention a justement pour objet de mettre en application un procédé d'étalonnage ne nécessitant pas une orientation rigoureuse de l'objet étalon. Ce procédé permet de retrouver tous les paramètres du réseau de franges ainsi que les caractéristiques de l'optique de visualisation en positionnant de façon relativement quelconque l'objet étalon afin de rendre l'application simple et pratique d'emploi.

Le principe de l'invention permettant ce positionnement à peu près quelconque de l'objet étalon consiste à utiliser un objet étalon tridimensionnel constitue de faces planes et parfaitement repérées entre elles ; la géométrie de cet objet étalon est connue, les angles respectifs entre les plans et la dimension des plans pouvant être mesures par des méthodes de métrologie classiques.

De façon plus précise, l'invention a pour objet un procédé d'étalonnage d'un système de métrologie tridimensionnelle dans lequel on utilise un objet étalon, des moyens d'acquisition de l'image comportant un réseau de franges projeté sur l'objet étalon et une optique de visualisation associée à une camera de prise de vue fixant l'image obtenue par ladite projection du réseau de franges sur l'objet étalon, et des moyens de traitement automatique des données, caractérisé en ce qu'il consiste :

– à définir un objet étalon tridimensionnel constitué d'un ensemble de plans s'interceptant et d'un point 0e, intersection de trois de ces plans ;

– à déterminer, à partir des moyens de traitement et des caractéristiques de l'objet étalon, des caractéristiques des moyens d'acquisition ; et

– à déterminer, à partir de ces mêmes moyens de traitement et de ces mêmes caractéristiques de l'objet étalon, les caractéristiques de la position relative d'un référentiel étalon Re lié à l'objet étalon par rapport à un référentiel objet Ro lié à l'optique de visualisation.

De façon avantageuse, l'objet étalon utilise dans le procédé d'étalonnage comprend au moins quatre plans Pi non-coplanaires ayant pour équation sur l'image :

$$\pi i : a_{\parallel}(\omega x_I) + b_{\parallel}(\omega y_I) + \phi + d_{\parallel}(\omega) = 0,$$

$\omega x_I$, $\omega y_I$, $\phi$ et $\omega$ étant les coordonnées homogènes d'un point de l'objet étalon, $\omega$ représentant un facteur d'échelle homogène, et $a_{\parallel}$, $b_{\parallel}$ et $d_{\parallel}$ étant les coefficients homogènes du plan $\pi i$, chacun de ces plans comportant une zone rectangulaire choisie permettant une utilisation plus aisée des moyens de traitement.

Les caractéristiques des moyens d'acquisition comprennent les coefficients d'une matrice image :

$$[I_{3D}] = \begin{bmatrix} g & 0 & 0 & 0 \\ 0 & g & 0 & 0 \\ \dfrac{2}{px} & \dfrac{2}{py} & \dfrac{2}{pz} & \phi_0 \\ 0 & 0 & 1/f & 1 \end{bmatrix},$$

g et f étant respectivement le grandissement et la focale de l'optique de visualisation, $\phi_0$ étant la phase à l'origine et px, py et pz étant les pas du réseau de franges sur les axes respectifs 0x, 0y et 0z du référentiel objet Ro.

Selon une autre caracteristique de l'invention, les caractéristiques de la position relative du référentiel étalon Re par rapport au référentiel objet Ro comportent les coefficients d'une matrice translation [T] définie par un vecteur $\overrightarrow{0\,0\,e}$ , 0 étant l'origine du référentiel Ro et le point 0e ayant pour coordonnées dans ce référentiel Ro (ex, ey, ez), et les coefficients d'une matrice rotation [E] définie par les trois angles d'Euler.

Selon une caractéristique importante de l'invention, le procédé consiste, à partir des moyens de traitement, à mettre en oeuvre une phase d'initialisation et une phase de calcul des coefficients nécéssaires à la détermination des caractéristiques des moyens d'acquisition et des caractéristiques de la position relative du référentiel étalon Re par rapport au référentiel objet Ro, cette phase de calcul comportant un traitement itératif d'indice d'incrémentation j.

Cette phase d'initialisation comprend :

– le positionnement et l'imagerie de l'objet étalon ;

– la détermination de l'image de phase ;

– la saisie de la zone rectangulaire choisie dans les images de chacun des plans de l'objet étalon ;

– le calcul des coefficients d'une quadrique associée au plan Pi ;

– l'initialisation du facteur d'échelle homogène $\omega e$ du point origine du référentiel étalon ;

– l'initialisation d'au moins deux des coefficients de l'inverse d'une matrice d'étalonnage de dimension connue ;

– l'initialisation du facteur d'échelle homogène du point d'intersection de trois plans de l'objet étalon ;

– l'initialisation de l'indice d'incrémentation j ; et

– la détermination d'une valeur critère de fin de boucle.

De même, la phase de calcul comprend :

– la détermination des coefficients homogènes ($a_{li}$, $b_{li}$, $d_{li}$) des plans de l'objet étalon ;

– le calcul des coordonnées homogènes ( $\omega_e x_{le}$, $\omega_e y_{le}$, 0e, $\omega_e$), $\omega_e x_{le}$, $\omega_e y_{le}$, $\phi e$ et $\omega_e$ étant les coordonnées du point 0e dans un rèférentiel image $R_l$ ;

– la détermination des coefficients de la matrice étalonnage [ET] par les relations R1 et R2 décrites ultérieurement ;

– le calcul des caractéristiques des moyens d'acquisition et de la position relative du référentiel étalon (px, py, pz, gx, gy, $\phi$o, f, ex, ey, ez, $\theta$, $\phi$, $\psi$), gx et gy étant respectivement le grandissement sur les axes 0x et 0y, à partir de la relation :

$$[I_{3D}] \times [T] \times [E] = [ET]$$

– le remplacement des deux coefficients de l'inverse de la matrice étalonnage initialisés par leur valeur réelle obtenue par le calcul ;

– le calcul du facteur d'échelle homogène $\omega_i^j$ des points d'intersection de trois plans de l'objet étalon ;

– la vérification du critère CRI de fin de boucle par la relation :

$$CRI = \sum_{i=0}^{4} (\omega_i^j - \omega_i^{j-1})^2.$$

Ce procédé permet donc de simplifier la mise en application de la procédure d'étalonnage.

D'autres caractéristiques et avantages de l'invention apparaitront à la lecture de la description qui va suivre, donnée à titre illustratif et non limitatif en référence aux dessins dans lesquels :

– la figure 1 est une représentation schématique du principe connu de la projection d'un réseau de franges rectilignes sur un objet dont le relief déforme le réseau de franges ;

– la figure 2 représente schématiquement la position des différents référentiels utilisés lors de la mise en application du procédé selon l'invention ;

– la figure 3a est une représentation graphique de l'objet étalon de la forme la plus simple conformément à l'invention ;

– la figure 3b représente l'objet étalon selon la figure 3a complété de la représentation des zones rectangulaires à choisir lors de la mise en application du procédé ;

– la figure 4a représente graphiquement l'objet étalon selon un mode de réalisation préféré pour la mise en application du procédé selon l'invention ;

– la figure 4b est la représentation graphique de l'objet étalon selon la figure 4a complétée des zones rectangulaires choisies ;

– la figure 5 représente un schéma de principe du dispositif de mise en oeuvre de l'invention.

Dans la suite de la description, on utilisera indifféremment les expressions "réseau de franges" ou "réseau de franges rectilignes". De même, on comprendra par "figures de franges" des "figures de franges d'interférence" et par "système optique" l'ensemble camera de prise de vue et optique de visualisation.

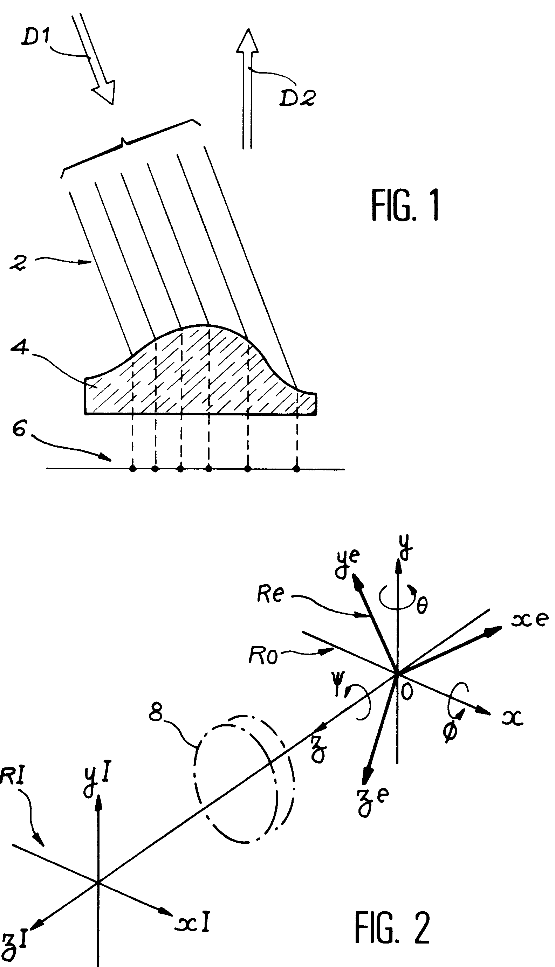

En référence à la figure 1 et selon le principe de la projection de franges, le réseau de franges rectilignes 2 est projeté selon une direction de projection D1 sur l'objet 4. Le relief de cet objet 4 déforme le réseau de franges 2 formant ainsi une figure de franges 6 observable selon une direction d'observation D2 différente de la direction D1.

Pour le procédé d'étalonnage selon l'invention, l'objet 4 utilisé est un objet étalon de forme choisie.

La figure 2 montre la position relative des trois référentiels entrant dans la configuration selon l'invention. Le référentiel Ro est le référentiel objet lié au système optique de visualisation :

– l'axe 0z est l'axe optique ;

– le point 0 est l'intersection de l'axe optique et du plan de mise au point ;

– les axes 0x et 0y sont parallèles aux axes des pixels de la camera de prise de vue.

Le référentiel $R_I$ est le référentiel image :

– le point $0_I$ est l'image du point 0 ;

– les axes $0x_I$, $0y_I$ et $0z_I$ sont identiques à 0x, 0y et 0z.

Le référentiel Re est le référentiel lié à l'objet étalon.

Il est possible, matriciellement, de passer du référentiel étalon Re au référentiel image $R_I$ grâce à trois matrices :

– une matrice rotation [E] définie par les trois angles d'Euler $\phi$, $\theta$ et $\psi$;

– une matrice translation [T] définie par la translation d'origine 0e et de vecteur $\overrightarrow{0\,0\,e}$ ; et

– une matrice image [13D] définie par les paramètres de l'optique de visualisation telle que décrite précédemment.

Les coefficients de ces trois matrices représentent les paramètres d'étalonnage que l'on cherche à déterminer dans le procédé d'étalonnage selon l'invention.

Pour déterminer ces paramètres, il est néccéssaire de connaître la forme de l'objet étalon choisi. Selon l'invention, l'objet étalon est défini comme étant formé d'un ensemble de plans non coplanaires et parfaitement répérés entre eux. Ces plans sont au moins au nombre de quatre. La géométrie de l'étalon est parfaitement connue après détermination par des méthodes de métrologie classiques.

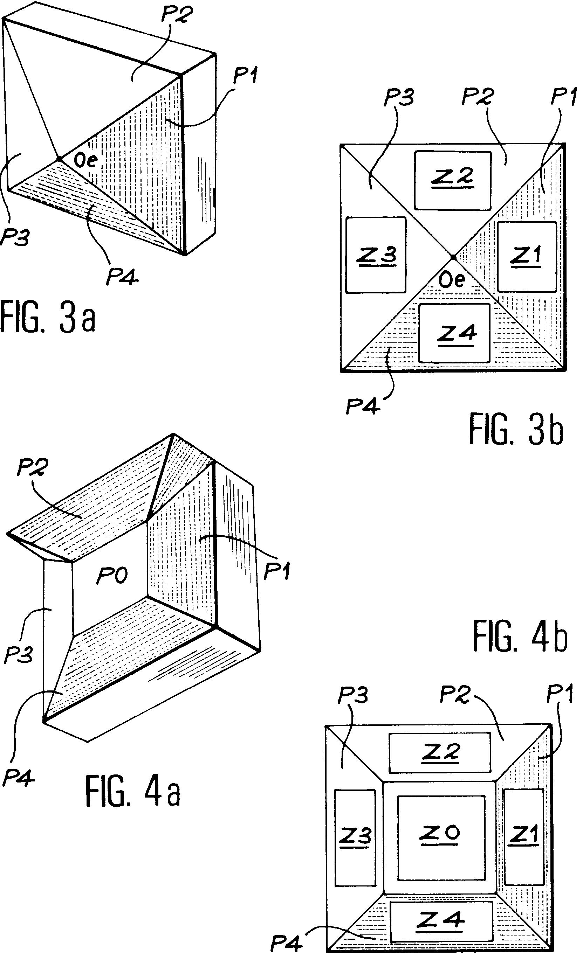

La figure 3a est la représentation graphique d'un objet étalon de forme pyramidale comportant quatre plans P1, P2, P3, P4 non-coplanaires et formant un point d'intersection 0e en son sommet.

La figure 3b représente le même objet étalon que celui de la figure 3a. Sur chacun des plans P1, P2, P3, P4 sont définies des zones, respectivement, Z1, Z2, Z3 et Z4 rectangulaires et choisies par l'utilisateur lors de la mise en application du procédé.

Sur la figure 4a, on a représenté un autre objet étalon de forme plus complexe. Cet objet étalon comprend cinq plans P0, P1, P2, P3 et P4 non-coplanaires et un point 0e, intersection des plans P0, P1 et P2.

La figure 4b représente schématiquement l'objet étalon selon la figure 4a complété des zones Z0, Z1, Z2, Z3 et Z4 rectangulaires choisies par l'utilisateur lors de l'application du procédé selon l'invention.

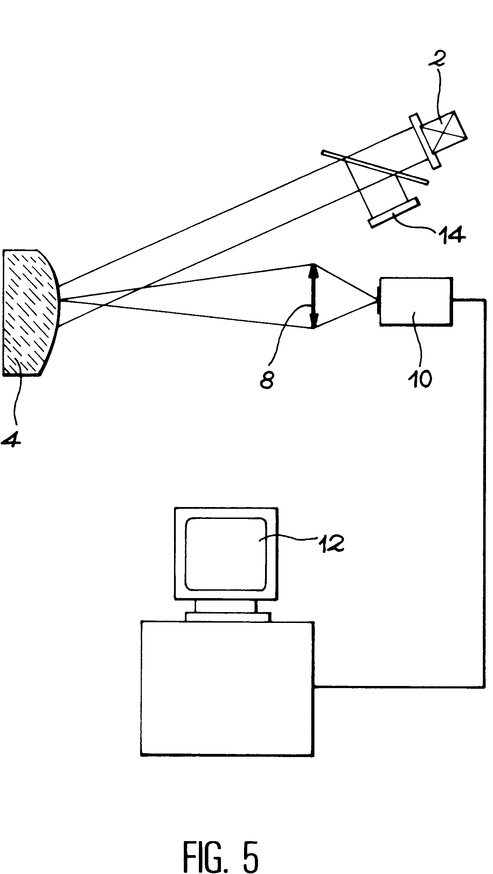

On a représenté, sur la figure 5, le schéma de principe d'un dispositif de mise en oeuvre du procédé selon l'invention. Un réseau de franges 2 est projeté sur l'objet à mesurer. L'association d'une caméra 10 de prise de vue et d'une optique de visualisation 8 permet de capter la figure de franges obtenue. Dans un mode de réalisation préféré, la caméra 10 est une caméra CCD (dispositif à transfert de charge) de prise de vue. De plus, un interféromètre 14 permet de faire varier le pas et l'orientation du réseau de franges. Enfin, des moyens de traitement permettent l'acquisition de l'image ainsi obtenue puis le traitement des caractéristiques de cette image.

Ce traitement des caractéristiques de l'image s'effectue par l'intermédiaire des moyens de traitement 12. Ces moyens de traitement 12 peuvent être réalisés par un ordinateur.

Selon le mode de réalisation choisi pour la description du traitement, l'objet étalon utilisé est celui décrit en figure 4b.

Le traitement des caractéristiques de l'image de l'objet étalon se compose de deux parties :

– une phase d'initialisation ;

– une phase de calculs itératifs.

Selon le mode de réalisation choisi, la phase d'initialisation consiste en l'éxécution des étapes suivantes :

– <u>Première étape</u> :il s'agit de positionner et deprojeter le réseau de franges rectilignes sur l'objet étalon, puis de calculer l'image de phase $\phi$ déduite des réglages du circuit de fonctionnement du procédé.

– <u>Seconde étape</u> :l'opérateur, grâce à un outil de saisie informatique, tel une souris, saisit, dans chacun des plans P0, P1, P2, P3 et P4 de l'objet étalon, la zone rectangulaire choisie.

– Troisième étape :il s'agit de calculer, dans chaque zone, les coefficients $A_{li}$, $B_{li}$, $C_{li}$, $D_{li}$, $E_{li}$ et $F_{li}$, de la quadrique Qi associée au plan Pi et d'équation :

$$Qi = A_{li}x_l + B_{li}y_l + C_{li}\phi + D_{li} + E_{li}\phi x_l + F_{li}\phi y_l = 0,$$

déterminée par approximation du facteur d'échelle homogène $\omega$ dans l'équation de plan $\pi i$.

– Quatrième étape :le choix de l'objet étalon selon la figure 4b permet de faire l'hypothèse que le point origine du repère étalon n'est pas très éloigné du plan de mise au point du système optique ; le facteur d'échelle homogène du point origine du repère étalon $\omega_e$ peut être approximé à 1 : $\omega_e = 1$.

– Cinquième étape :le produit des matrices $[I_{3D}]$, $[T]$ et $[E]$ forment la matrice étalonnage.

$$[ET] = \begin{bmatrix} ET_{11} & ET_{12} & ET_{13} & ET_{14} \\ ET_{21} & ET_{22} & ET_{23} & ET_{24} \\ ET_{31} & ET_{32} & ET_{33} & ET_{34} \\ ET_{41} & ET_{42} & ET_{43} & ET_{44} \end{bmatrix}$$

Les coefficients de l'inverse de la matrice étalonnage $[ET]_{33}^{-1}$ et $[ET]_{32}^{-1}$ sont initialisés respectivement à 1 et à 0.

– Sixième étape :il s'agit d'initialiser le facteur d'échelle homogène du point d'intersection des plans P0, P2 P3 de l'objet étalon.

– Septième étape :l'indice j de la boucle d'itération comprise dans la phase de calcul décrite ultérieurement est initialisée à 1.

– Huitième étape :on choisit une valeur du critère de fin de boucle prise comme référence.

La phase de calcul consiste à exécuter l'ensemble des étapes de calcul, détaillées dans la suite, à l'intérieur d'une boucle d'itération dont l'indice de boucle est incrémenté de 1 tant qu'un critère de fin de boucle CRI ne contient pas une valeur considérée correcte.

– Première étape :il s'agit de déterminer, par calculs, les coefficients homogènes $a_{li}$, $b_{li}$, $d_{li}$ des plans de l'objet étalon à partir de la relation :

$$(a_{li}, b_{li}, 1, d_{li}) = (\frac{A_{li}\,[ET]_{33}^{-1}}{\alpha_i}, \frac{B_{li}\,[ET]_{33}^{-1}}{\alpha_i}, 1, \frac{D_{li}\,[ET]_{33}^{-1}}{\alpha_i}) \text{ avec } \alpha_i = C_{li} + D_{li}\,[ET]_{32}^{-1}.$$

– Deuxième étape :il s'agit de déterminer les coordonnées homogènes du point 0e à partir de l'équation de plan Pi : $A_{li}x_{li} + b_{li}y_{li} + \phi e + d_{li} = 0$ pour les plans P0, P1 et P2, et de la relation :

$$\phi e = \frac{A_{li}\,x_{le} - B_{li}\,y_{le} - D_{li}}{C_{li} + E_{li}\,x_{le} + F_{li}\,y_{le}}$$

– Troisième étape :cette étape consiste à déterminer les coefficients de la matrice étalonnage [ET] par les relations R1 et R2.

$$R1 : [W] \times [ET] = \begin{bmatrix} 0 \\ 0 \\ 0 \end{bmatrix}$$

$$\text{avec } [W] = \begin{pmatrix} a_{Ii} & 0 & -a_{Ii}a_i & 0 & b_{Ii} & 0 & -b_{Ii}a_i & 0 & 1 & 0 & -a_i & 0 & d_{Ii} & 0 & -d_{Ii}a_i & 0 \\ 0 & a_{Ii} & -a_{Ii}b_i & 0 & 0 & b_{Ii} & -b_{Ii}b_i & 0 & 0 & 1 & -b_i & 0 & 0 & d_{Ii} & -d_{Ii}b_i & 0 \\ 0 & 0 & -a_{Ii}d_i & a_{Ii} & 0 & 0 & -b_{Ii}d_i & b_{Ii} & 0 & 0 & -d_i & 1 & 0 & 0 & -d_{Ii}d_i & d_{Ii} \end{pmatrix}$$

et

$$
R2 : \begin{pmatrix} \omega_e^j {}^x I\,e \\ \\ \omega_e^j {}^y I\,e \\ \\ \phi e \\ \\ \omega_e \end{pmatrix} = [E\,T] \begin{pmatrix} 0 \\ 0 \\ 0 \\ 1 \end{pmatrix}
$$

– <u>Quatrième étape</u> :il s'agit de la déduction des paramètres d'étalonnage px, py, pz, ex, ey, ez, θ, φ, ψ, gx, gy, φo et f à partir des valeurs des coefficients de la matrice étalonnage calculés dans l'étape précédente.

– <u>Cinquième étape</u> :elle consiste à remplacer les valeurs, approximées dans la phase d'initialisation, des coefficients $[ET]_{33}^{-1}$ et $[ET]_{32}^{-1}$ par leur valeur respective calculée.

– <u>Sixième étape</u> :calcul du facteur d'échelle homogène $\omega_i^j$ du point d'intersection des plans P0, P2 et P3.

– <u>Septième étape</u> :il s'agit du calcul de la valeur CRI, critère de fin de boucle, par la relation :

$$
CRI = \sum_{i=0}^{4} (\omega_i^j - \omega_i^{j-1})^2
$$

La valeur obtenue pour CRI est comparée à la valeur de référence choisie dans la phase d'initialisation. Si CRI est inférieure à cette valeur de référence, alors les paramètres d'étalonnage sont considérés corrects. Dans le cas inverse, l'indice d'incrémentation j est incrémenté de 1 et les calculs sont repris en début de la phase de calcul.

Dans un exemple du mode de réalisation décrit précédemment, les précisions obtenues, pour la détermination des angles d'Euler, θ, φ, ψ, sont de 0,5° et de 1 % pour les pas du réseau de franges et les grandissements gx et gy.

Outre les caractéristiques et avantages décrits précédemments, ce procédé permet de connaître la taille maximale de l'objet à mesurer car la taille de la surface éclairée est connue.

**Revendications**

1.  Procédé d'étalonnage d'un système de métrologie tridimensionnelle dans lequel on utilise un objet étalon (4), des moyens d'acquisition de l'image comportant un réseau de franges (2) projeté sur l'objet étalon et une optique de visualisation (8) associée à une caméra de prise de vue (10) fixant l'image obtenue par ladite projection du réseau de franges sur l'objet étalon, et des moyens de traitement (12) automatique des données, caractérisé en ce qu'il consiste :
    – à définir un objet étalon tridimensionnel constitué d'un ensemble de plans s'interceptant et d'un point 0e, intersection de trois de ces plans ;
    – à déterminer, à partir des moyens de traitement et des caractéristiques de l'objet étalon, des caractéristiques des moyens d'acquisition ; et
    – à déterminer, à partir de ces mêmes moyens de traitement et de ces mêmes caractéristiques de l'objet étalon, les caractéristiques de la position relative d'un référentiel étalon Re lié à l'objet étalon par rapport à un référentiel objet Ro lié à l'optique de visualisation.

2.  Procédé d'étalonnage selon la revendication précédente, caractérisé en ce que l'objet étalon comprend au moins quatre plans Pi non-coplanaires ayant pour équation sur l'image :

$$\pi i : a_{il}(\omega x_l) + b_{il}(\omega y_l) + \phi + d_{il}(\omega) = 0,$$

$\omega x_l$, $\omega y_l$, $\phi$ et $\omega$ étant les coordonnées homogènes d'un point de l'objet étalon, $\omega$ représentant un facteur d'échelle homogène, et $a_{li}$, $b_{li}$ et $d_{li}$ étant les coefficients homogènes du plan $\pi i$, ces plans comportant chacun une zone rectangulaire (Zi) choisie permettant une utilisation plus aisée des moyens de traitement.

3. Procédé d'étalonnage selon l'une quelconque des revendications précédentes, caractérisé en ce que les caractéristiques des moyens d'acquisition comprennent les coefficients d'une matrice image :

$$[I_{3D}] = \begin{bmatrix} g & 0 & 0 & 0 \\ 0 & g & 0 & 0 \\ \dfrac{2\pi}{px} & \dfrac{2\pi}{py} & \dfrac{2\pi}{pz} & \phi_0 \\ 0 & 0 & 1/f & 1 \end{bmatrix}$$

g et f étant respectivement le grandissement, f la focale de l'optique de visualisation, $\phi_0$ étant la phase à l'origine et px, py et pz étant les pas du réseau de franges sur les axes respectifs 0x, 0y et 0z du référentiel objet Ro.

4. Procédé d'étalonnage selon la revendication précédente, caractérisé en ce que les caractéristiques de la position relative du référentiel étalon Re par rapport au référentiel objet Ro comportent les coefficients d'une matrice translation [T] définie par un vecteur $\overrightarrow{00e}$, le point 0 étant l'origine du référentiel Ro et le point 0e ayant pour coordonnées dans le référentiel Ro (ex, ey, ez), et les coefficients d'une matrice rotation [E] définie par les trois angles d'Euler.

5. Procédé d'étalonnage selon l'une quelconque des revendications précédentes, caractérisé en ce qu'il consiste, à partir des moyens de traitement, à mettre en oeuvre une phase d'initialisation et une phase de calcul des coefficients nécessaires à la détermination des caractéristiques des moyens d'acquisition et des caractéristiques de la position relative du référentiel objet Ro, cette phase de calcul comportant un traitement itératif d'indice d'incrémentation j.

6. Procédé d'étalonnage selon la revendication précédente, caractérisé en ce que la phase d'initialisation comprend :
   – le positionnement et l'imagerie de l'objet étalon ;
   – la détermination de l'image de phase ;
   – la saisie de la zone rectangulaire choisie dans chacun des plans de l'objet étalon ;
   – le calcul des coefficients d'une quadrique associée au plan Pi ;
   – l'initialisation du facteur d'échelle homogène $\omega_e$ du point origine du référentiel étalon ;
   – l'initialisation d'au moins deux des coefficients de l'inverse d'une matrice d'étalonnage de dimension connue ;
   – l'initialisation du facteur d'échelle homogène du point d'intersection de trois plans de l'objet étalon ;
   – l'initialisation de l'indice d'incrémentation j ; et
   – la détermination d'une valeur critère de fin de boucle.

7. Procédé d'étalonnage selon l'une des revendications 5 ou 6, caractérisé en ce que la phase de calcul comporte :
   – la détermination des coefficients homogènes ($a_{li}$, $b_{li}$, $d_{li}$) des plans de l'objet étalon ;
   – le calcul des coordonnées homogènes ($\omega_e x_{le}$, $\omega_e y_{le}$, $\phi_e$, $\omega_e$), $\omega_e x_{le}$, $\omega_e y_{le}$, $\phi_e$ et $\omega_e$ étant les coordonnées du point 0e dans un référentiel image $R_i$.
   – la détermination des coefficients de la matrice étalonnage [ET] par les relations :

$$[W] \times [ET] = \begin{pmatrix} 0 \\ 0 \\ 0 \end{pmatrix}$$

avec $[W] = \begin{pmatrix} a_{Ii} & 0 & -a_{Ii}a_i & 0 & b_{Ii} & 0 & -b_{Ii}a_i & 0 & 1 & 0 & -a_i & 0 & d_{Ii} & 0 & -d_{Ii}a_i & 0 \\ 0 & a_{Ii} & -a_{Ii}b_i & 0 & 0 & b_{Ii} & -b_{Ii}b_i & 0 & 0 & 1 & -b_i & 0 & 0 & d_{Ii} & -d_{Ii}b_i & 0 \\ 0 & 0 & -a_{Ii}d_i & 0 & 0 & 0 & -b_{Ii}d_i & b_{Ii} & 0 & 0 & -d_i & 1 & 0 & 0 & -d_{Ii}d_i & d_{Ii} \end{pmatrix}$

et

$$\begin{pmatrix} \omega_e^j x_{Ie} \\ \\ \omega_e^j y_{Ie} \\ \\ \phi e \\ \\ \omega_e \end{pmatrix} = [ET] \begin{pmatrix} 0 \\ 0 \\ 0 \\ 1 \end{pmatrix}$$

$a_i$, $b_i$ et $d_i$ étant les coefficients du plan $P_i$ ;
– le calcul des caractéristiques des moyens d'acquisition et de la position relative du référentiel étalon ($px$, $py$, $pz$, $gx$, $gy$, $\phi o$, $f$, $ex$, $ey$, $ez$, $\theta$, $\phi$, $\psi$), $gx$ et $gy$ étant respectivement le grandissement sur les axes $0x$ et $0y$, à partir de la relation :
$$[I_{3D}] \times [T] \times [E] = [ET]$$
– le remplacement des deux coefficients de l'inverse de la matrice étalonnage initialisés par leur valeur réelle obtenue par le calcul ;
– le calcul du facteur d'échelle homogène $\omega_i^j$ des points d'intersection de trois plans de l'objet étalon ;
– la vérification du critère CRI de fin de boucle par la relation :

$$CRI = \sum_{i=0}^{4} ( \omega_i^j - \omega_i^{j-1})^2 .$$

FIG. 1

FIG. 2

FIG. 3a

FIG. 3b

FIG. 4a

FIG. 4b

FIG. 5

Office européen
des brevets

**RAPPORT DE RECHERCHE EUROPEENNE**

Numero de la demande

EP    91 40 3265

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | IEEE TRANSACTIONS ON PATTERN ANALYSIS AND MACHINE INTELLIGENCE vol. 10, no. 3, Mai 1988, NEW YORK US pages 374 - 386; GORDON ET AL: 'Real-Time Part Position Sensing' * le document en entier * --- | 1 | G01B11/24 |
| Y | GB-A-2 104 652 (SRI INTERNATIONAL) * page 5, alinéa 3 - page 7, ligne 27; figures 1,3,6,7 * --- | 1 | |
| Y | WO-A-9 008 939 (VISION 3D) * le document en entier * --- | 1 | |
| A | WO-A-8 607 443 (THE BROKEN HILL PROPRIETARY COMPANY) * page 6, ligne 15 - page 21; figures 1-8 * --- | 1 | |
| A | WO-A-9 009 561 (TSIKOS) --- | | |
| A | US-A-4 498 778 (WHITE) --- | | **DOMAINES TECHNIQUES RECHERCHES (Int. Cl.5)** |
| A | Proceedings IEEE Computer Society Conference on Pattern Recognition & Image Processing, June 1982 Las Vegas, Nevada; pp 370-378; Tio et al: Surface Measurment for Robot Vision ----- | | G01B |

Le présent rapport a été établi pour toutes les revendications

| Lieu de la recherche | Date d'achèvement de la recherche | Examinateur |
|---|---|---|
| LA HAYE | 10 MARS 1992 | BATTESON A. |